# EUROPEAN PATENT APPLICATION

(11) **EP 4 224 391 A1**
(43) Date of publication of application: **09.08.2023**
(21) Application number: 23161131.0
(22) Date of filing: 30.03.2020
(51) Int. Cl.: G06Q 10/20, G07C 5/08, G06Q 30/00, B01D 35/143

(54) **FILTER SUPERVISION SYSTEM AND SUPERVISION METHOD THEREOF**

(30) Priority: 27.05.2019 CN 201910454602
(62) Divisional of application: 20166628.6
(71) Applicant: Wal Fuel Systems (Hefei) Co., Ltd., Hefei City, Anhui 230000 (CN)
(72) Inventor: Shi, Zhongcheng, Hefei City, 230000 (CN); Huang, Xiaohu, Hefei City, 230000 (CN); Ma, Yecun, Hefei City, 230000 (CN); Fan, Xinjun, Hefei City, 230000 (CN)
(74) Representative: karo IP

(57) **Abstract**

The invention discloses a filter supervision system and a supervision method thereof. The filter supervision system comprises a remote server and a filter, wherein the filter is provided thereon with a genuine product identification unit, and an NFC chip at least storing a product serial number is provided on a filter element inside the filter; the genuine product identification unit reads filter element product information that at least includes a product serial number and is stored inside the NFC chip through NFC communication; the genuine product identification unit sends the read filter element product information to the remote server through a wireless communication network; and the remote server processes the filter element product information and forwards a processing result of the filter element product information to the user. The invention can identify and confirm the authenticity of the filter element product used in the filter on the whole vehicle, and take corresponding product protection measures according to the identification result to better protect the performance and the reliability of the vehicle, especially for the fuel supply system and the engine, and to provide users with better service.

## Description

### Technical Field

The invention relates to a filter supervision system capable of identifying the authenticity of a filter element of the filter and a filter supervision method.

### Background Art

The filters under common use presently are ordinary filters which, from the perspective of monitoring and managing the filters, cannot collect information integrally such as the use state of a filter, and therefore, filter manufacturers and sellers cannot know the actual use condition of the filter.

In order to ensure the use safety and the service life of a filter, plenty of data of the use state of the filter need to be known and mastered in time, such as when the filter is replaced, how much mileage is used at the time of replacement, the mileage sum of the vehicle at the time of replacement, whether the filter for replacement is genuine or an inferior counterfeit, whether the filter has reached the end of its service life when replaced, whether the filter currently needs to be drained, how is the current internal fuel temperature of the filter, and whether the fuel used in the filter is a genuine standard grade oil or inferior fuel that cannot meet the requirement, etc..

### Summary of the Invention

The technical problem to be solved by the invention is to provide a filter supervision system. Another technical problem to be solved by the invention is to provide a filter supervision method.

For a filter supervision system, the invention adopts the technical solution that the filter supervision system comprises a remote server and a filter, wherein the filter is provided thereon with a genuine product identification unit, and an NFC chip at least storing a product serial number is provided on a filter element inside the filter;
the genuine product identification unit reads filter element product information that at least includes a product serial number and is stored inside the NFC chip through NFC communication; the genuine product identification unit sends the read filter element product information to the remote server through a wireless communication network;
the remote server processes the filter element product information and forwards a processing result of the filter element product information to a user.

Preferably, the genuine product identification unit is also connected with an automobile electronic control unit ECU in a CAN bus communication mode, and communicates with the automobile electronic control unit ECU to read the mileage information of the whole vehicle.

Further preferably, the genuine product identification unit is provided with a local state indication interface, an instrument panel state indication interface and a local data storage interface;
the local state indication interface, the instrument panel state indication interface and the local data storage interface are connected with the automobile electronic control unit ECU in a CAN bus communication mode.

Preferably, the remote server forwards the processing result of the filter element product information to the user in the form of a mobile phone APP or a WeChat applet.

For a filter supervision method, the invention adopts the technical solution that a filter supervision method, in which the filter comprises a filter element, comprises the following steps:
(1) the filter being provided with a genuine product identification unit, and the filter element being provided with an NFC chip at least storing a product serial number; the genuine product identification unit reading a product serial number inside the NFC chip through NFC communication and acquiring filter element product information including the product serial number, accessing a product database of the filter through a wireless communication network, identifying and confirming whether the filter element is genuine or not;
(2) under the condition of confirming that the product is genuine, collecting pressure difference, water level, temperature and/or fuel quality information of the running filter through the genuine product identification unit;
(3) the genuine product identification unit transmitting the collected pressure difference, water level, temperature and/or fuel quality information of the filter through a SIM card to the remote server via a wireless communication network for receiving;
(4) the remote server processing the collected pressure difference, water level, temperature and/or fuel quality information of the filter and monitoring the filter in real time;
(5) the remote server forwarding the genuine product identification confirmation result of the filter element and the processing result of the pressure difference, water level, temperature and/or fuel quality information of the filter to the user.
   Preferably, in step (1), if it is detected that the filter element product used in the filter is not genuine, at least one of the following measures is taken to limit the normal use of the vehicle by the user:
(6) limiting an output torque of the power system under the condition that corresponding authorities and interfaces are opened at the OEM;
(7) cutting off the oil circuit of the filter by controlling an electromagnetic valve built in the filter;
(8) simulating the filter to provide a false oil-water sensor signal to the automobile electronic control unit ECU, so that the automobile electronic control unit ECU is forced to limit the power output of the engine and give an alarm on the instrument panel.

Preferably, in step (2), the genuine product identification unit also collects GPS position information, driving mileage information of the vehicle and other data information that the whole vehicle is willing to disclose via a vehicle CAN bus interface.

Preferably, in step (5), the remote server forwards the genuine product identification confirmation result of the filter element and the processing result of the pressure difference, water level, temperature and/or fuel quality information of the filter to the user in the form of a mobile phone APP or a WeChat applet, or provides a webpage for the client to visit by the OEM/main engine plant/maintenance factory, or allows customer access by a client end.

The invention has the following beneficial effects:
It can identify and confirm the authenticity of the filter element product used in the filter on the whole vehicle, and take corresponding product protection measures according to the identification result to better protect the performance and the reliability of the vehicle, especially for the fuel supply system and the engine, and to provide users with better service.

### Brief Description of the Drawings

The invention will now be described in further detail with reference to the accompanying drawings and specific embodiments.
Fig. 1 is an overall architecture diagram of an embodiment of a filter supervision system of the invention.
Fig. 2 is a hardware functional block diagram of an intelligent monitoring terminal according to an embodiment of the filter supervision system of the invention.

### Detailed Description of the Invention

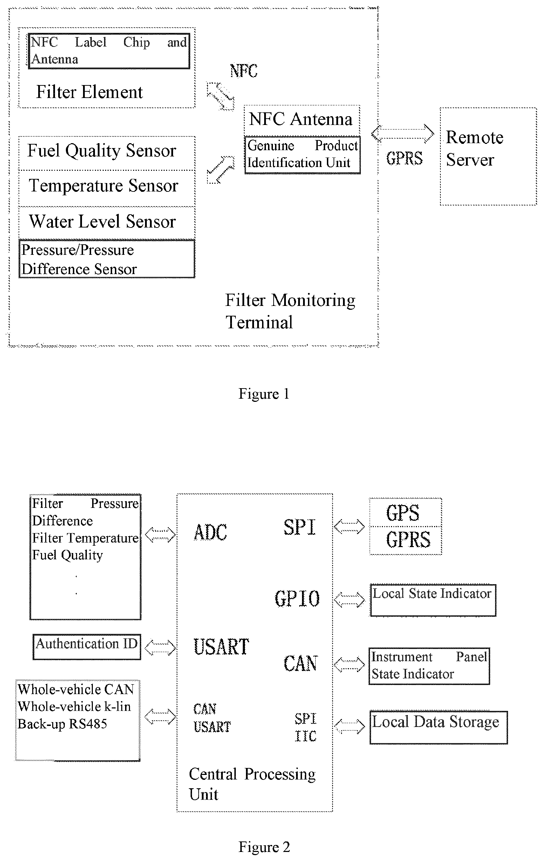

Fig. 1 is a filter supervision system consisting of a remote server and a genuine product identification unit. The genuine product identification unit is arranged on the filter, and an NFC chip at least storing a product serial number is arranged on a filter element inside the filter. Meanwhile, the filter is also provided with a pressure difference sensor, a temperature sensor, a water level sensor and a fuel quality sensor, as well as a GPRS module and a satellite navigation module, wherein the satellite navigation module adopts a global positioning system GPS module or a Beidou satellite navigation system module.

The NFC chip is connected with the genuine product identification unit in an NFC communication mode, and the genuine product identification unit reads filter element product information which at least includes a product serial number and is stored inside the NFC chip through the NFC communication.

The genuine product identification unit is further connected with the pressure difference sensor, the temperature sensor, the water level sensor and the fuel quality sensor and collects the pressure difference, the water level, the temperature and/or the fuel quality information of the running filter. The genuine product identification unit sends the collected filter element product information and the pressure difference, the water level, the temperature and/or the fuel quality information of the filter to a remote server through a GPRS module or other wireless communication networks.

The remote server processes the collected filter element product information and the pressure difference, the water level, the temperature and/or the fuel quality information of the filter, and forwards the processed filter element product information and the filter information processing result to a user in the form of a mobile phone APP or a WeChat applet.

The genuine product identification unit is provided with a local state indication interface, an instrument panel state indication interface and a local data storage interface, and the genuine product identification unit is connected with an electronic control unit ECU of an automobile installed with the filter in a CAN bus communication mode through the local state indication interface, the instrument panel state indication interface and the local data storage interface.

The genuine product identification unit is connected with the remote server through a GPRS module or other wireless communication networks. The genuine product identification unit attains positioning through a global positioning system GPS module or a Beidou satellite navigation system module.

A central processing unit of the genuine product identification unit is an STM32 F103, of which a hardware functional block diagram is shown in Fig. 2.

In this embodiment, the genuine product identification unit and the NFC chip storing the product serial number arranged on the filter element, the pressure difference sensor, the temperature sensor, the water level sensor and the fuel quality sensor, as well as the GPRS module and the satellite navigation module arranged on the filter together form a filter monitoring terminal. The filter monitoring terminal is connected with a whole-vehicle electronic control unit ECU in a CAN bus communication mode through a local data storage interface, and is meanwhile connected with a remote server through a wireless communication network, to form a filter supervision system.

A filter supervision method based on the filter supervision system, wherein the filter comprises a filter element, comprises the following steps:
(1) the filter being provided with a genuine product identification unit, and the filter element being provided with an NFC chip at least storing a product serial number; the genuine product identification unit reading a product serial number inside the NFC chip through NFC communication and acquiring filter element product information at least including the product serial number, accessing a product database of the filter through a wireless communication network, identifying and confirming whether the filter element is genuine or not.
   If it is detected that the filter element product used in the filter is not genuine, at least one of the following measures is taken to limit the normal use of the vehicle by the user:
   (a) limiting an output torque of the power system under the condition that corresponding authorities and interfaces are opened at the OEM;
   (b) cutting off the oil circuit of the filter by controlling an electromagnetic valve built in the filter;
   (c) simulating the filter to provide a false oil-water sensor signal to the automobile electronic control unit ECU, so that the automobile electronic control unit ECU is forced to limit the power output of the engine and give an alarm on the instrument panel.
(2) under the condition of confirming that the product is genuine, collecting pressure difference, water level, temperature and/or fuel quality information of the running filter through the genuine product identification unit. The genuine product identification unit also collects GPS position information, driving mileage information of the vehicle installed with the filter and other data information that the whole vehicle is willing to disclose via a vehicle CAN bus interface.
(3) the genuine product identification unit transmitting the collected pressure difference, water level, temperature and/or fuel quality information of the filter through a SIM card to the remote server via a wireless communication network for receiving;
(4) the remote server processing the collected pressure difference, water level, temperature and/or fuel quality information of the filter and monitoring the filter in real time;
(5) the remote server forwarding the genuine product identification confirmation result of the filter element and the processing result of the pressure difference, water level, temperature and/or fuel quality information of the filter to the user in the form of a mobile phone APP or a WeChat applet, or providing a webpage for the client to visit by the OEM/main engine plant/maintenance factory, or allowing customer access by a client end.

The filter supervision system of this embodiment has the following functions:

### 1. Authentication

This function is a basic service of the filter supervision system. It performs authenticity identification for the filter element on replacement by a user and feeds back the authentication result at the filter seat in an LED indicator lamp mode; and in a CAN bus communication mode, it displays the authentication result at the instrument panel of the vehicle, so as to ensure the user's right to know about the authenticity of the purchased filter and guide the user to select a genuine filter.

A non-contact authentication scheme based on NFC communication is adopted for the genuine product identification, and an NFC label chip and coil with a product serial number are pre-embedded in the filter element when the filter element leaves the factory. The filter monitoring terminal first reads the product serial number inside the label chip through NFC communication to obtain the filter information, and then accesses the company product database through a GPRS network to confirm whether a current product is genuine or not.

If it is detected that the current product is not genuine, the following measures can be taken to limit the normal use of the vehicle by the user: 1. limiting an output torque of the power system, for which function corresponding authorities and interfaces need to be opened at the OEM; 2. cutting off the oil circuit of the filter, wherein the oil circuit is cut off by controlling an electromagnetic valve built in the filter, and the function can be independently carried out without support from the OEM; 3. simulating an oil-water sensor signal provided by the filter to the ECU of the vehicle to provide a false signal to the ECU, so that the ECU is forced to limit the power output of the engine and give an alarm on the instrument panel, wherein the function can be independently carried out without support from the OEM.

### 2. Real-time monitoring

This function is used for monitoring and recording the condition of the filter in real time during running of the vehicle: main state parameters of the filter, an operation state of the driver, the vehicle's working condition state, the vehicle's operation track and other information. This function can be used for providing abundant original monitoring data.

In the first stage, the monitoring measures to be realized are: pressure difference between the front and the back of the filter element, temperature of the fuel in the filter, and location of the vehicle (based on base station information). Among the three measures above, the pressure difference and the temperature are collected through an analog-to-digital converter (ADC, see Fig. 2) on the intelligent terminal; the vehicle location information is obtained through the base station information provided by the telecommunications operator.

### 3. Statistical analysis

This function is carried out through in-depth mining and statistical analysis of the monitoring data, which can thus provide services such as a filter state, a performance statistical analysis result, a failure statistical analysis result and the like. On one hand, this function can guide the design and development of subsequent products, and on the other hand, this function can be opened to OEMs to assist the optimization of the products, and also opened to the maintenance factory to assist the failure analysis and positioning. According to the function, the right to speak in data docking with the OEMs can be enhanced.

4. Service life estimation: this function realizes an intelligent estimation of the service life of the filter element, and provides a more scientific filter service life result for a terminal user. Traditional filter service life estimation is based on the driving mileage. For example, if the filter element filters fuel to reach a certain driving mileage, it is considered to have reached the end of its service life and needs to be replaced. But in fact, the service life of the filter is closely related to the working condition of the whole machine/whole vehicle. On one hand, incorrect service life estimation may cause the service life of the whole machine/whole vehicle to be shortened, for example, when the vehicle works in a heavy load or a congested road condition for a long time, although a specified mileage is not reached, the performance of the fuel filter has been seriously reduced, and an untimely replacement will lead to growing abrasion of the whole machine/whole vehicle; and on the other hand, incorrect service life estimation may raise the cost of use for the user, for example, when the vehicle works in a light load or an unobstructed road section for a long time, although the specified mileage is reached, the performance of the fuel filter has not been significantly reduced, and a replacement at this moment will lead to waste of cost from the user. This function will realize an intelligent estimation of the service life of the filter in a more scientific way and allow the information to be directly forwarded to a user, which helps the user to reduce the cost of use of the whole vehicle during its full life cycle, and to increase the use viscosity of the system by a terminal user.

The embodiments of the invention described above are not intended to limit the scope of the invention. Any modification, equivalent replacement and improvement etc. made within the spirit and the principle of the invention shall be contained within the protection scope of the claims of the invention.

## Claims

1. A filter supervision system, **characterized by** comprising a remote server and a filter, wherein the filter is provided thereon with a genuine product identification unit, and an NFC chip at least storing a product serial number is provided on a filter element inside the filter;
the genuine product identification unit reads filter element product information that at least includes a product serial number and is stored inside the NFC chip through NFC communication; the genuine product identification unit sends the read filter element product information to the remote server through a wireless communication network;
the remote server processes the filter element product information and forwards a processing result of the filter element product information to a user.

2. The filter supervision system according to claim 1, **characterized in that**: the genuine product identification unit is also connected with an automobile electronic control unit in a CAN bus communication mode, and communicates with the automobile electronic control unit to read the mileage information of the whole vehicle.

3. The filter supervision system according to claim 2, **characterized in that**: the genuine product identification unit is provided with a local state indication interface, an instrument panel state indication interface and a local data storage interface;
the local state indication interface, the instrument panel state indication interface and the local data storage interface are connected with the automobile electronic control unit in a CAN bus communication mode.

4. The filter supervision system according to claim 1, **characterized in that**: the remote server forwards the processing result of the filter element product information to the user in the form of a mobile phone APP or a WeChat applet.

5. A filter supervision method, the filter comprising a filter element, **characterized by** comprising the following steps:
(1) the filter being provided with a genuine product identification unit, and the filter element being provided with an NFC chip storing a product serial number; the genuine product identification unit reading a product serial number inside the NFC chip through NFC communication and acquiring filter element product information including the product serial number, accessing a product database of the filter through a wireless communication network, identifying and confirming whether the filter element is genuine or not;
(2) under the condition of confirming that the product is genuine, collecting pressure difference, water level, temperature and/or fuel quality information of the running filter through the genuine product identification unit;
(3) the genuine product identification unit transmitting the collected pressure difference, water level, temperature and/or fuel quality information of the filter through a SIM card to the remote server via a wireless communication network for receiving;
(4) the remote server processing the collected pressure difference, water level, temperature and/or fuel quality information of the filter and monitoring the filter in real time;
(5) the remote server forwarding the genuine product identification confirmation result of the filter element and the processing result of the pressure difference, water level, temperature and/or fuel quality information of the filter to the user.

6. The filter supervision method according to claim 5, **characterized in that**, in step (1), if it is detected that the filter element product used in the filter is not genuine, at least one of the following measures is taken to limit the normal use of the vehicle by the user:
(6) limiting an output torque of the power system under the condition that corresponding authorities and interfaces are opened at the OEM;
(7) cutting off the oil circuit of the filter by controlling an electromagnetic valve built in the filter;
(8) simulating the filter to provide a false oil-water sensor signal to the automobile electronic control unit, so that the automobile electronic control unit is forced to limit the power output of the engine and give an alarm on the instrument panel.

7. The filter supervision method according to claim 5, **characterized in that**, in step (2), the genuine product identification unit also collects GPS position information, driving mileage information of the vehicle and other data information that the whole vehicle is willing to disclose via a vehicle CAN bus interface.

8. The filter supervision method according to claim 5, **characterized in that**, in step (5), the remote server forwards the genuine product identification confirmation result of the filter element and the processing result of the pressure difference, water level, temperature and/or fuel quality information of the filter to the user in the form of a mobile phone APP or a WeChat applet, or provides a webpage for the client to visit by the OEM/main engine plant/maintenance factory, or allows customer access by a client end.
